# EUROPEAN PATENT SPECIFICATION

(11) **EP 1 112 920 B1**
(45) Date of publication and mention of the grant of the patent: **31.08.2005**
(21) Application number: 00128579.0
(22) Date of filing: 27.12.2000
(51) Int. Cl.: B62M 7/12, B62M 9/02

(54) **Transmission means and motor vehicle**
Übertragungsmittel und Kraftfahrzeug
Dispositif de transmission et véhicule à moteur

(30) Priority: 27.12.1999 JP 37128899
(43) Date of publication of application: 04.07.2001
(73) Proprietor: YAMAHA HATSUDOKI KABUSHIKI KAISHA, Shizuoka-ken (JP)
(72) Inventor: Nara, Kazuhiro, Iwata-shi, Shizuoka-ken (JP); Inomori, Toshinori, Iwata-shi, Shizuoka-ken (JP)
(74) Representative: Grünecker, Kinkeldey, Stockmair & Schwanhäusser Anwaltssozietät

(56) References cited:
- DE-A- 3 504 817
- US-A- 4 036 068
- US-A- 4 505 352
- PATENT ABSTRACTS OF JAPAN vol. 1998, no. 03, 27 February 1998 (1998-02-27) & JP 09 287472 A (YAMAHA MOTOR CO LTD), 4 November 1997 (1997-11-04)

## Description

This invention relates to a transmission means **according to the preamble of independent claim 1** and to a motor vehicle with a vehicle body, an engine especially a unit swing type of engine and a transmission means.

**Such a transmission means and a respective motor vehicle can be taken from the prior art document JP 09-287472 A. Said transmission means comprises a speed reduction device, wherein the gear provided on the driven shaft and in mesh with the first gear of the intermediate shaft is provided between the driven pulley and the second gear of the intermediate shaft being in mesh with the gear on the output shaft.**

The unit swing type of engine mounted on small-sized scooter type of motorcycles is constituted as a single unit by assembling together an engine, a V-belt type of automatic transmission, and a speed reduction mechanism.

The above-mentioned V-belt type of automatic transmission comprises; a movable sheave disposed, between a fixed sheave secured to the crankshaft (drive shaft) of an engine and a cam plate, to be slidable along the crankshaft; centrifugal weights disposed between the movable sheave and the camplate, and a V-belt fitted around between a drive pulley and a driven pulley, with the drive pulley constituted with the fixed and movable sheaves and with the driven pulley constituted with the fixed sheave and a movable sheave.

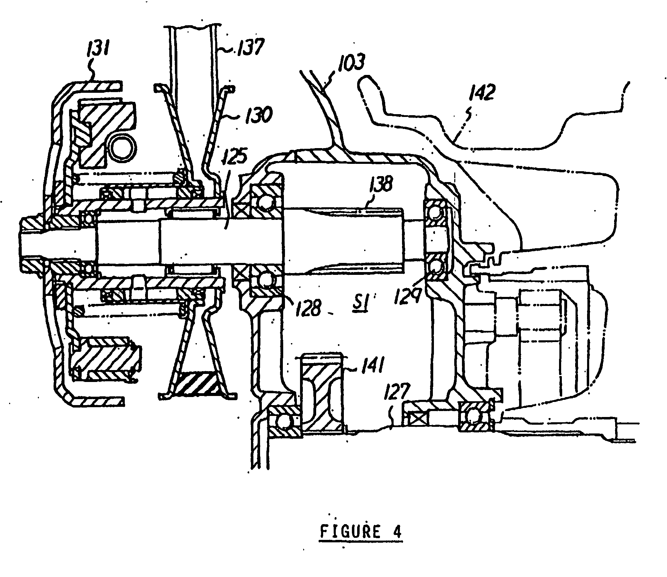

An example of the conventional transmission of the unit swing type of engine is shown in FIG. 4.

FIG. 4 is a cross-sectional plane view of the unit swing type of engine to be mounted on a scooter type of motorcycle. As shown in the figure, a driven shaft 125 is rotatably supported on its one side with paired right and left ball bearings 128 and 129 in a transmission case 103. On the other side of the driven shaft 125, overhanging from the ball bearing 128, are supported a driven pulley 130 of a V-belt type of automatic transmission and a centrifugal clutch 131. An endless V-belt 137 is fitted around between the driven pulley 130 constituting the V-belt type of automatic transmission and a drive pulley (not shown).

The part on one side of the driven shaft 125 supported with the right and left ball bearings 128 and 129 is located in a gear chamber S1 and has an integrally formed speed reduction gear 138. The speed reduction gear 138 meshes through another speed reduction gear provided on an intermediate shaft (not shown) with still another speed reduction gear 141 provided on an output shaft (wheel shaft) 127 to which is attached a rear wheel 142 of the motorcycle.

The conventional transmission shown in FIG. 4 has problems; because the part of the driven shaft 125 on the side where the speed reduction gear 138 is provided is supported with the ball bearings 128 and 129, the size of the gear chamber S1 increases, size and weight of components around the driven shaft 125 increase, and the shape and outside diameter of the hub of the rear wheel 142 are restricted. If it is attempted to locate the rear wheel 142 apart from the transmission case 103 50 that the shape of the hub is not affected, the unit swing type of engine protrudes largely in the vehicle width direction when the engine is mounted on the vehicle body. And if the distance between the drive pulley and the driven pulley 130 is changed so that the outside diameter of the rear wheel 142 is not affected, it is possible that the durability of the V-belt 137 decreases or that the performance of the V-belt type of automatic transmission lowers.

Another problem is that because of the short distance between the points on the driven shaft 125 supported with the ball bearings 128 and 129 as well as the heavy weights of the driven pulley 130 and the centrifugal clutch 131 supported on the overhanging part of the driven shaft 125, the driven shaft 125 deflects largely and causes large noise.

It is an objective of the present invention to provide a transmission means **as indicated above** and a motor vehicle with a vehicle body, an engine especially a unit swing type of engine and a transmission means having low size and low weight components and a compact structure.

According to the present invention said objective is solved by a transmission means **having the features of claim 1**.

It is a special advantage of the present invention to provide a transmission means which generate low noise and secure high degree of freedom in the shape of a rear wheel hub of motorcycles.

**Preferred embodiments are laid down in the dependent claims.**

It is a special advantage of the present invention to provide a motor vehicle with a vehicle body, an engine especially a unit swing type of engine and a transmission means with a V-belt type of automatic transmission which generate low noise and secure high degree of freedom in the shape of a rear wheel hub of the motor vehicle (motorcycle).

Preferred embodiments of the present invention are laid down in further dependent claims.

In the following, the present invention is explained in greater detail with respect to several embodiments thereof in conjunction with the accompanying drawings, wherein:
FIG. 1 is a plan view in cross-section of a unit swing type of engine;
FIG. 2 is a partial, cross-sectional plan view of the unit swing type of engine showing the constitution of the transmission means;
FIG. 3 is a cross-sectional plan view of the one-way clutch portion of the unit swing type of engine provided with the transmission means; and
FIG. 4 is a cross-sectional plan view of an example of conventional transmission of a unit swing type of engine.

Embodiments will be described in reference to the appended drawings.

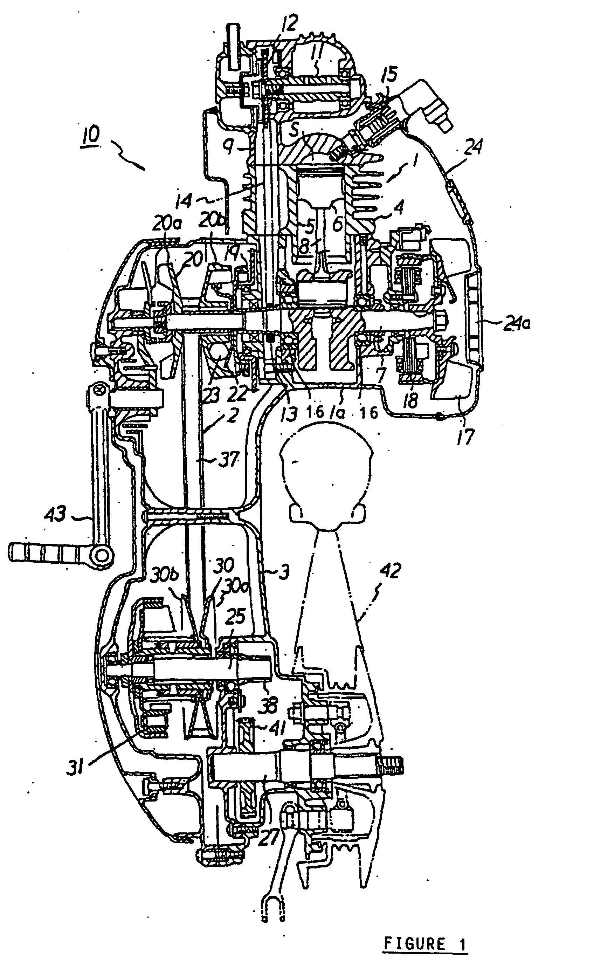

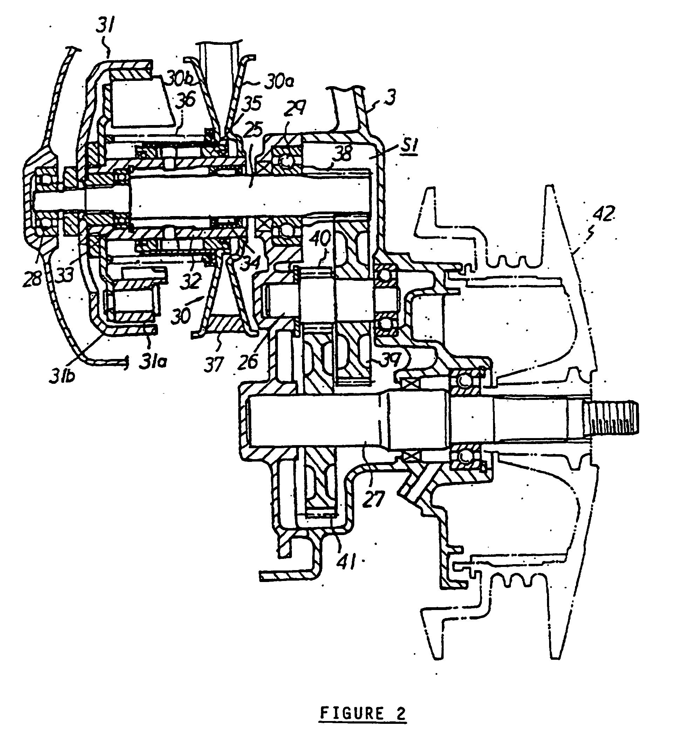

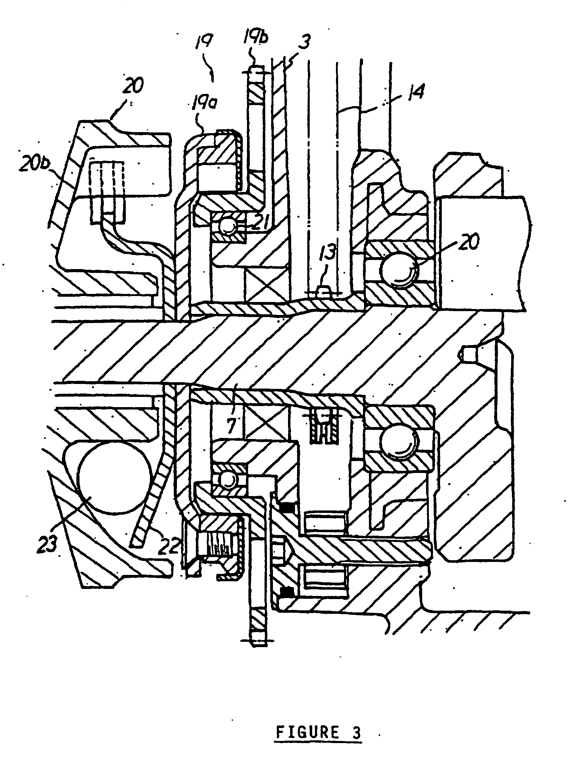

FIG. 1 is a plan view in cross section of a unit swing type of engine. FIG. 2 is a partial, cross-sectional plan view of the unit swing type of engine showing the constitution of the transmission. FIG. 3 is a cross-sectional plan view showing the constitution of the one-way clutch portion of the unit swing type of engine.

The unit swing type of engine 10, shown in FIG. 1, to be mounted on a scooter type of a motor vehicle or motorcycle (not shown), is constituted with; a forced-air-cooled type of four stroke cycle engine (hereinafter simply called an engine) 1, a V-belt type of automatic transmission 2 disposed in a transmission case 3 extending from the left side of the crankcase 1 a of the engine 1 toward the rear (toward the page bottom in FIG. 1) of the vehicle body, and a transmission device including a speed reduction device, all assembled in a compact unit.

Here, constitution of the engine 1 will be roughly described.

The engine 1 has a single cylinder 5 bored in a cylinder body 4 directed generally horizontally forward of the vehicle body of a scooter type of motorcycle. A piston 6 is slidably disposed in the cylinder 5. The piston 6 is connected through a connecting rod 8 to a crankshaft 7 rotatably disposed in the vehicle width direction.

A cylinder head 9 placed to cover the cylinder body 4 has an intake port and an exhaust port (both not shown) bored therein. The intake and exhaust ports are opened and closed according to appropriate timing with intake and exhaust valves driven with a valve drive mechanism including a camshaft 11, so that gas in the cylinder is exchanged as required. A chain sprocket 12 is attached to one end of the camshaft 11. An endless cam chain 14 is routed around between the chain sprocket 12 and a chain sprocket 13 attached to the middle part of the crankshaft 7, so that the rotation of the crankshaft 7 is transmitted through the chain sprocket 13, the cam chain 14, and the chain sprocket 12 to the camshaft 11, and the camshaft 11 is driven to rotate at a specified speed (half the rotation speed of the crankshaft 7).

As shown in FIG. 1, an ignition plug 15 is screwed into the cylinder head 9. The electrode of the ignition plug 15 is located in a corner of the combustion chamber 5 formed with the cylinder head 9.

The crankshaft 7 is rotatably supported with paired right and left ball bearings 16. A cooling fan 17 is attached to one (right) end of the crankshaft 7. A dynamo 18 is disposed inside the cooling fan 17. As shown in FIG. 3 in detail, the chain sprocket 13, a starter wheel 19 and a drive pulley 20 as a component of the V-belt type of automatic transmission 2 are attached to the other (left) end of the crankshaft 7.

As shown in FIG. 3 in detail, the starter wheel 19 is constituted with a one-way clutch 19a attached to the crankshaft 7 and a starter gear 19b rotatably supported on the crankcase 3 through a ball bearing 21. In this embodiment, since the ball bearing 21 is used in place of conventional shell bearing to support the starter gear 19b, components such as a boss gear for supporting the shell bearing is eliminated, so that the number of components and the width of the engine are reduced.

The drive pulley 20, a component of the V-belt type of automatic transmission 2, is constituted with a fixed sheave 20a secured to one end of the crankshaft 7 and a movable sheave 20b supported to be slidable along the crankshaft 7. A plural number of centrifugal weights 23 are housed to be movable in radial directions in the space between the movable sheave 20b and a cam plate 22 secured to the crankshaft 7.

The entire engine 1 constituted as described above is enclosed with an air shroud 24 made of a plastic material. Part of the air shroud 24 opposite the cooling fan 17 is provided with a round cooling air introducing opening 24a coaxially with the crankshaft 7.

Next will be described the constitution of the transmission of the unit swing type of engine 10.

As shown in FIG. 2 in detail, in the rear part of the crankcase 3 are disposed a driven shaft 25, an intermediate shaft 26, and an output (wheel) shaft 27, parallel to each other and apart from each other in the fore-and-aft direction of the vehicle body.

The driven shaft 25 is supported on both ends with paired right and left ball bearings 28 and 29. A centrifugal clutch 31 and a driven pulley 30 of the V-belt type of automatic transmission 2 are supported between the right and left ball bearings 28 and 29 on the driven shaft 25.

On the driven shaft 25 is rotatably supported a hollow shaft 32 through a ball bearing 33 and a needle bearing 34. To the inside end of the hollow shaft 32 is attached the fixed sheave 30a of the driven pulley 30. A movable sleeve 35 is slidably fitted over the hollow shaft 32. The movable sheave 30b of the driven pulley 30 is attached to the inside end of the movable sleeve 35. The movable sheave 30b is urged toward the fixed sheave 30a with a spring 36 installed as compressed between the centrifugal clutch 31 and the movable sheave 30b itself. The V-belt type of automatic transmission 2 is constituted with; the driven pulley 30 constituted with the fixed sheave 30a and the movable sheave 30b, the drive pulley 20 disposed on the crankshaft 7, and an endless V-belt 37 routed between the drive pulley 20 and the driven pulley 30.

The centrifugal clutch 31 is constituted with a clutch inside member 31 a fixed to the outside end of the hollow shaft 32 and a clutch outside member 31 b of a drum shape fixed to the outside end (inside the ball bearing 28) of the driven shaft 25.

The one end of the driven shaft 25 extending out of the one ball bearing 29 is located in the gear chamber S1 of the transmission case 3. On that end is integrally formed a speed reduction gear (drive gear) 38.

Speed reduction gears (driven and drive gears) 39 and 40 of a large and a small diameters are attached to the intermediate shaft 26. The speed reduction (driven) gear 39 on the intermediate shaft 26 meshes with the speed reduction (drive) gear 38. The speed reduction (drive) gear 40 meshes with a large diameter speed reduction (driven) gear 41. To the end of the output (wheel) shaft 27 extending out of the transmission case 3 is attached a rear wheel 42 of the scooter type of motorcycle. In FIG. 1 is shown a kick lever 43 for kick-starting the engine.

Next will be described the function of the unit swing type of engine 10 constituted as described above.

When the engine 1 of the unit swing type of engine 10 is started as the kick lever 43 or a starter button (not shown) is operated and the crankshaft 7 rotates, the cooling fan 17 and the dynamo 18 both attached coaxially to the crankshaft 7 rotate together. At the same time, the rotation of the crankshaft 7 is transmitted through the drive pulley 20 of the V-belt type of automatic transmission 2, the V-belt 37, and the driven pulley 30 to the hollow shaft 32. The hollow shaft 32 and the clutch inside member 31 a of the centrifugal clutch 31 secured to the hollow shaft 32 are driven together to rotate.

When the rotation speed of the crankshaft 7 is low, the centrifugal force working on the centrifugal weights 23 rotating together with the crankshaft 7 is small, and the centrifugal weights 23 remain unmoved in the position shown in FIG. 1. At this time, the movable sheave 20b of the drive pulley 20 also remains in the position shown in FIG. 1 and the girdling diameter of the V-belt 37 around the drive pulley 20 is also small. Therefore, the girdling diameter of the V-belt 37 around the driven pulley 30 is held large, and the rotation of the crankshaft 7 is reduced and transmitted to the hollow shaft 32 and to the clutch inside member 31 a of the clutch. In this way, while the rotation speed of the clutch inside member 31 a of the clutch is small and the centrifugal force working on the clutch inside member 31a of the clutch is smaller than a specified value, the centrifugal clutch 31 is in the off state, the rotation of the hollow shaft 32 and the clutch inside member 31a is not transmitted to the driven shaft 25, and the hollow shaft 32 and the clutch inside member 31 a rotate freely on the driven shaft 25.

After that, when the rotation speed of the crankshaft 7 increases and the centrifugal force working on the clutch inside member 31a exceeds a specified value, the centrifugal clutch 31 is made to the on state, the rotation of the hollow shaft 32 is transmitted through the centrifugal clutch 31 to the driven shaft 25, and the driven shaft 25 is driven to rotate. And the rotation of the driven shaft 25 is transmitted through the speed reduction gears 38, 39, 40, and 41, while being reduced in two stages, to the output shaft 27, and farther to the rear wheel 42 attached to the out put shaft 27, so that the scooter type of motorcycle is driven.

The magnitude of the centrifugal force working on the centrifugal weights 23 is in proportion to the rotation speed of the crankshaft 7. According to the magnitude of the centrifugal force, the centrifugal weights 23 move radially outward along the contact surface of the cam plate 22 to move the movable sheave 20b of the drive pulley 20 toward the fixed sheave 20a, and to increase the girdling diameter of the V-belt 37 around the drive pulley 20. In contrast, the girdling diameter of the V-belt 37 around the driven pulley 30 decreases. As a result, the speed ratio of the driven shaft 25 to the crankshaft 7 increases gradually, to gradually increase the rotation speed of the driven shaft 25. In this way, automatic speed change is performed.

With this embodiment described above, the driven shaft 25 is supported at two positions with the paired right and left ball bearings 28 and 29, and the driven pulley 30 and the centrifugal clutch 31 of the V-belt type of automatic transmission 2 are supported between the two bearings 28 and 29 on the driven shaft 25. As a result, elastic deflection of the driven shaft 25 is held small and the noise around the driven shaft 25 is reduced.

Also, the end of the driven shaft 25 extending out of one 29 of the ball bearings is located in the gear chamber S1 of the transmission case 3 and the speed reduction gear 38 is attached to that end. As a result, it is possible to reduce the size of the gear chamber S1, to make components around the driven shaft 25 small in size and weight, and it is also possible to secure a high degree of freedom in the shape of the rear wheel 42 of the motorcycle as the shape is not restricted with the gear chamber S1.

As is clear from the above description, a transmission means of a unit swing type of engine having a transmission case extending from one vehicle width direction side of an engine toward the rear of a vehicle body houses; a V-belt type of automatic transmission which transmits power from a drive pulley supported on a crankshaft extending in the vehicle width direction through a V-belt and a driven pulley to a driven shaft extending in the vehicle width direction, and a speed reduction device which transmits power from one vehicle width direction end of the driven shaft through speed reduction gears to an output shaft, the driven shaft and the output shaft are disposed parallel to each other with a mutual distance in the fore-and-aft direction of the vehicle body, the driven shaft is supported on its both ends with paired right and left bearings, the driven shaft is made to support the driven pulley of the V-belt type of automatic transmission between the right and left bearings.

As a result, such effects are provided; the area around the driven shaft is made compact and light-weight, and noise is reduced. Another effect is that a high degree of freedom is secured for the shape of the rear wheel of motorcycles. Accordingly, since the driven shaft is supported on both ends with paired right and left bearings, and the driven pulley of the V-belt type of automatic transmission is supported with part of the driven shaft between the right and left bearings, deflection of the driven shaft is held small and noise around the driven shaft is reduced.

Said transmission of a unit swing type of engine has one end of the driven shaft extending from one of the bearings is made to extend into the gear chamber of the transmission case, and to this end are attached the speed reduction gears.

Since it is possible to employ a constitution in which one end of the driven shaft extending out of one of the bearings is located in the gear chamber of the transmission case and the speed reduction gear is attached to that end, it is possible to reduce the size of the gear chamber, and reduce the size and weight of components around the driven shaft. Since the shape of the rear wheel hub of the motorcycle is not restricted with the gear chamber, a high degree of freedom in the rear wheel shape is secured.

The above mentioned embodiment teaches a transmission means especially for a unit swing type of engine with a V-belt type of automatic transmission 2 provided with a drive pulley 20 and a driven pulley 30 connected with the drive pulley 20 by a V-belt 37. Said driven pulley 30 is connected to a driven shaft 25. Said driven shaft 25 is supported by a pair of bearings 28,29 and said driven pulley 30 is supported on said driven shaft 25 between said bearings 28,29.

A clutch means 31 is provided for connecting the driven pulley 30 with the driven shaft 25. Said clutch means 31 is supported between the pair of bearings 28,29. Said V-belt type of automatic transmission 2 with the drive and driven pulleys 20,30 and said driven shaft 25 are housed within a transmission case 3. A speed reduction device 38,39,40,41,26 is provided to transmit power from the driven shaft 25 to an output shaft 27.

The driven shaft 25 and the output shaft 27 are disposed parallel to each other. One end of the driven shaft 25 extends from one of said bearings 29 into a gear chamber S1 of the transmission case and said extended end of the driven shaft 25 is provided with a speed reduction gear 38 of said speed reduction device. Said speed reduction device comprises an intermediate shaft 26 for supporting speed reduction gears, wherein one gear 39 is in mesh with the speed reduction gear 38 provided on the driven shaft 25 and a further speed reduction gear 40 of the intermediate shaft 26 is in mesh with a speed reduction gear 41 provided on the output shaft 27. The driven shaft 25, the output shaft 27, the intermediate shaft 26 and the crankshaft 7 of an engine 1 supporting said drive pulley 20 are disposed parallel to each other.

The embodiment also teaches a Motor vehicle with a vehicle body, an engine 1 especially a unit swing type of engine and a transmission means as mentioned above with a V-belt type of automatic transmission 2 provided with a drive pulley 20 and a driven pulley 30 connected with the drive pulley 20 by a V-belt 37, said driven pulley 30 is connected to a driven shaft 25 wherein said driven shaft 25 is supported by a pair of bearings 28,29 and said driven pulley 30 is supported on said driven shaft 25 between said bearings 28,29, wherein said driven shaft 25 extends in the width direction of the vehicle body.

Said V-belt type of automatic transmission 2 with the drive and driven pulleys 20,30 and said driven shaft 25 are housed within a transmission case 3 of the motor vehicle or motor cycle. Said transmission case 3 is extending from one vehicle body width direction side of said engine 1 toward a rear side of said vehicle body. The driven shaft 25 and the output shaft 27 are disposed parallel to each other with a mutual distance in the fore-and-aft direction of said vehicle body.

One end of the driven shaft 25 extends from one of said bearings 29 into a gear chamber S1 of the transmission case 3 towards the vehicle body and said extended end of the driven shaft 25 is provided with a speed reduction gear 38 of said speed reduction device.

The driven shaft 25, the output shaft 27, the intermediate shaft 26 and the crankshaft 7 of an engine 1 supporting said drive pulley 20 are disposed parallel to each other in the width direction of the vehicle body.

## Claims

1. Transmission means especially for a unit swing type of engine with a V-belt type of automatic transmission (2) provided with a drive pulley (20) and a driven pulley (30) connected with the drive pulley (20) by a V-belt (37), said driven pulley (30) is connected to a driven shaft (25), said driven shaft (25) is supported by a pair of bearings (28,29) and said driven pulley (30) is supported on said driven shaft (25) between said bearings (28,29), a speed reduction device (38,39,40,41,26) is provided to transmit power from the driven shaft (25) to an output shaft (27), said speed reduction device comprises a speed reduction gear (38) provided on the driven shaft (25), an intermediate shaft (26) for supporting a first and a second speed reduction gear, wherein said first speed reduction gear (39) supported on the intermediate shaft (26) is in mesh with the speed reduction gear (38) provided on the driven shaft (25), and the second speed reduction gear (40) supported on the intermediate shaft (26) is in mesh with a speed reduction gear (41) provided on the output shaft (27),
**characterized in that**
the second speed reduction gear (40) supported on the intermediate shaft (26) is provided between the driven pulley (30) and the first speed reduction gear (39) supported on the intermediate shaft (26)

2. Transmission means according to claim 1, **characterized in that** a clutch means (31) is provided for connecting the driven pulley (30) with the driven shaft (25), wherein said clutch means (31) is supported between the pair of bearings (28,29).

3. Transmission means according to claim 1 or 2, **characterized in that** said V-belt type of automatic transmission (2) with the drive and driven pulleys (20,30) and said driven shaft (25) are housed within a transmission case (3).

4. Transmission means according to at least one of the claims 1 to 3, **characterized in that** the driven shaft (25) and the output shaft (27) are disposed parallel to each other.

5. Transmission means according to at least one of the claims 1 to 4, **characterized in that** one end of the driven shaft (25) extends from one of said bearings (29) into a gear chamber (S1) of the transmission case and the speed reduction gear (38) on the driven shaft (25) is provided on the extended end of the driven shaft (25).

6. Transmission means according to at least one of the claims 1 to 5, **characterized in that** the driven shaft (25), the output shaft (27), the intermediate shaft (26) and the crankshaft (7) of an engine (1) supporting said drive pulley (20) are disposed parallel to each other.

7. Motor vehicle with a vehicle body, an engine (1) especially a unit swing type of engine and a transmission means according to at least one of the claims 1 to 6, wherein said driven shaft (25) extends in the width direction of the vehicle body.

8. Motor vehicle according to claim 7, wherein said V-belt type of automatic transmission (2) with the drive and driven pulleys (20,30) and said driven shaft (25) are housed within a transmission case (3), said transmission case (3) is extending from one vehicle body width direction side of said engine (1) toward a rear side of said vehicle body.

9. Motor vehicle according to claim 7 or 8, wherein the driven shaft (25) and the output shaft (27) are disposed parallel to each other with a mutual distance in the fore-and-aft direction of said vehicle body.

10. Motor vehicle according to at least one of the claims 7 to 9, wherein one end of the driven shaft (25) extends from one of said bearings (29) into a gear chamber (S1) of the transmission case (3) towards the vehicle body and said extended end of the driven shaft (25) is provided with a speed reduction gear (38) of said speed reduction device (38,39,40,41,26).

11. Motor vehicle according to at least one of the claims 7 to 9, wherein the driven shaft (25), the output shaft (27), the intermediate shaft (26) and the crankshaft (7) of an engine (1) supporting said drive pulley (20) are disposed parallel to each other in the width direction of the vehicle body.

## Patentansprüche

1. Getriebeeinrichtung, insbesondere für einen Motor vom Schwenkeinheitstyp mit einem automatischen Getriebe (2) vom Keilriementyp, versehen mit einer Antriebsriemenscheibe (20) und einer angetriebenen Riemenscheibe (30), verbunden mit der Antriebsriemenscheibe (20) durch einen Keilriemen (37), wobei die angetriebene Riemenscheibe (30) mit einer angetriebenen Welle (25) verbunden ist, die angetriebene Welle (25) durch ein Paar von Lagern (28, 29) gelagert ist und die angetriebene Riemenscheibe (30) auf der angetriebenen Welle (25) zwischen den Lagern (28, 20) gelagert ist, wobei eine Drehzahlreduzierungsvorrichtung (38, 39, 40, 41, 26) vorgesehen ist, Energie von der angetriebenen Welle (25) auf eine Ausgangswelle (27) zu übertragen, die Drehzahlreduzierungsvorrichtung aufweist ein Drehzahlreduzierungszahnrad (38), vorgesehen auf der angetriebenen Welle (25), eine Zwischenwelle (26), für das Lagern eines ersten und zweiten Drehzahlreduzierungszahnrades, wobei das erste Drehzahlreduzierungszahnrad (39), gelagert auf der Zwischenwelle (26) im Kämmeingriff ist mit dem Drehzahlreduzierungszahnrad (38), vorgesehen auf der angetriebenen Welle (25), und das zweite Drehzahlreduzierungszahnrad (40), gelagert auf der Zwischenwelle (26), im Kämmeingriff ist mit einem Drehzahlreduzierungszahnrad (41), das auf der Ausgangswelle (27) vorgesehen ist,
**dadurch gekennzeichnet, dass**
das zweite Drehzahlreduzierungszahnrad (40), gelagert auf der Zwischenwelle (26), zwischen der angetriebenen Riemenscheibe (30) und dem ersten Drehzahlreduzierungszahnrad (39), gelagert auf der Zwischenwelle (26), vorgesehen ist.

2. Getriebeeinrichtung nach Anspruch 1, **dadurch gekennzeichnet, dass** eine Kupplungseinrichtung (31) für das Verbinden der angetriebenen Riemenscheibe (30) mit der angetriebenen Welle (25) vorgesehen ist, wobei die Kupplungseinrichtung (31) zwischen dem Lagerpaar (28, 29) gelagert ist.

3. Getriebeeinrichtung nach Anspruch 1 oder 2, **dadurch gekennzeichnet, dass** das automatische Getriebe (2) vom Keilriementyp mit der Antriebs- und der angetriebenen Riemenscheibe (20, 30) und die angetriebene Welle (25) innerhalb des Getriebegehäuses (3) untergebracht sind.

4. Getriebeeinrichtung nach zumindest einem der Ansprüche 1 bis 3, **dadurch gekennzeichnet, dass** die angetriebene Welle (25) und die Ausgangswelle (27) parallel zueinander angeordnet sind.

5. Getriebeeinrichtung nach zumindest einem der Ansprüche 1 bis 4, **dadurch gekennzeichnet, dass** sich ein Ende der angetriebenen Welle (25) von einem der Lager (29) in eine Getriebekammer (S1) des Getriebegehäuses erstreckt und das Drehzahlreduzierungszahnrad (38) auf der angetriebenen Welle (25) auf dem verlängerten Ende der angetriebenen Welle (25) vorgesehen ist.

6. Getriebeeinrichtung nach zumindest einem der Ansprüche 1 bis 5, **dadurch gekennzeichnet, dass** die angetriebene Welle (25), die Ausgangswelle (27), die Zwischenwelle (26) und die Kurbelwelle (7) eines Motors (1), die die Antriebsriemenscheibe (20) lagert, parallel zueinander angeordnet ist.

7. Kraftfahrzeug mit einer Fahrzeugkarosserie, einem Motor (1), insbesondere ein Motor von Schwenkeinheitstyp und eine Getriebeeinrichtung nach zumindest einem der Ansprüche 1 bis 6, wobei sich die angetriebene Welle (25) in die Richtung der Breite der Fahrzeugkarosserie erstreckt.

8. Kraftfahrzeug nach Anspruch 7, wobei das automatische Getriebe (2) vom Keilriementyp mit der Antriebs- und der angetriebenen Riemenscheibe (20, 30) und der angetriebenen Welle (25) innerhalb eines Getriebegehäuses (3) untergebracht ist, wobei sich das Getriebegehäuses (3) von einer Richtung der Breite der Fahrzeugkarosserie des Motors (1) in die Richtung nach einer Rückseite der Fahrzeugkarosserie erstreckt.

9. Kraftfahrzeug nach Anspruch 7 oder 8, wobei die angetriebene Welle (25) und die Ausgangswelle (27) parallel zueinander mit einem gegenseitigen Abstand in der Richtung nach vom und nach hinten der Fahrzeugkarosserie angeordnet sind.

10. Kraftfahrzeug nach zumindest einem der Ansprüche 7 bis 9, wobei sich ein Ende der angetriebenen Welle (25) von einem der Lager (29) in die Getriebekammer (S1) des Getriebegehäuses (3) in die Richtung zu der Fahrzeugkarosserie erstreckt und dieses verlängerte Ende der angetriebenen Welle (25) mit einem Drehzahlreduzierungszahnrad (38) der Drehzahlreduzierungsvorrichtung (38, 39, 40, 41, 26) versehen ist.

11. Kraftfahrzeug nach zumindest einem der Ansprüche 7 bis 9, wobei die angetriebene Welle (25), die Ausgangswelle (27), die Zwischenwelle (26) und die Kurbelwelle (7) eines Motors (1), die die Antriebsriemenscheibe (20) lagert, zueinander parallel in Richtung der Breite der Fahrzeugkarosserie angeordnet sind.

## Revendications

1. Moyens de transmission spécialement pour un moteur de type oscillant unitaire avec une transmission automatique (2) de type courroie trapézoïdale pourvue d'une poulie d'entraînement (20) et d'une poulie entraînée (30) raccordée à la poulie d'entraînement (20) par une courroie trapézoïdale (37), ladite poulie entraînée (30) étant raccordée à un arbre entraîné (25), ledit arbre entraîné (25) étant supporté par une paire de paliers (28, 29) et ladite poulie entraînée (30) étant supportée sur ledit arbre entraîné (25) entre lesdits paliers (28, 29), un dispositif de réduction de vitesse (38, 39, 40, 45, 26) étant prévu pour transmettre la puissance de l'arbre entraîné (25) à un arbre de sortie (27), ledit dispositif de réduction de vitesse comprenant un engrenage de réduction de vitesse (38) disposé sur l'arbre entraîné (25), un arbre intermédiaire (26) destiné à supporter un premier et un second engrenages de réduction de vitesse, dans lesquels le premier engrenage de réduction de vitesse (39) supporté sur l'arbre intermédiaire (26) est engrené avec l'engrenage de réduction de vitesse (38) disposé sur l'arbre entraîné (25), et le second engrenage de réduction de vitesse (40) supporté sur l'arbre intermédiaire (26) est engrené avec un engrenage de réduction de vitesse (41) disposé sur l'arbre de sortie (27),
**caractérisés en ce que**
le second engrenage de réduction de vitesse (40) supporté sur l'arbre intermédiaire (26) est disposé entre l'arbre entraîné (30) et le premier engrenage de réduction de vitesse (39) supporté sur l'arbre intermédiaire (26).

2. Moyens de transmission selon la revendication 1, **caractérisés en ce que** des moyens d'embrayage (31) sont prévus pour raccorder la poulie entraînée (30) à l'arbre entraîné (25), dans lesquels lesdits moyens d'embrayage (31) sont supportés entre la paire de paliers (28, 29).

3. Moyens de transmission selon la revendication 1 ou 2, **caractérisés en ce que** la transmission automatique (2) de type courroie trapézoïdale avec les poulies d'entraînement et entraînée (20, 30) et ledit arbre entraîné (25) sont logés dans un carter de boîte de vitesses (3).

4. Moyens de transmission selon l'une quelconque des revendications 1 à 3, **caractérisés en ce que** l'arbre entraîné (25) et l'arbre de sortie (27) sont disposés en parallèle l'un à l'autre.

5. Moyens de transmission selon l'une quelconque des revendications 1 à 4, **caractérisés en ce qu'**une extrémité de l'arbre entraîné (25) s'étend à partir de l'un desdits paliers (29) dans une chambre à engrenage (S1) du carter de boîte de vitesses et l'engrenage de réduction de vitesse (38) sur l'arbre entraîné (25) est disposé sur l'extrémité étendue de l'arbre entraîné (25).

6. Moyens de transmission selon l'une quelconque des revendications 1 à 5, **caractérisés en ce que** l'arbre entraîné (25), l'arbre de sortie (27), l'arbre intermédiaire (26) et le vilebrequin (7) d'un moteur (1) supportant ladite poulie d'entraînement (20) sont disposés en parallèle les uns aux autres.

7. Véhicule à moteur comportant une carrosserie de véhicule, un moteur (1), spécialement un moteur de type oscillant unitaire et des moyens de transmission selon l'une quelconque des revendications 1 à 6, dans lequel ledit arbre entraîné (25) s'étend dans la direction de la largeur de la carrosserie du véhicule.

8. Véhicule à moteur selon la revendication 7, dans lequel la transmission automatique (2) de type courroie trapézoïdale avec les poulies d'entraînement et entraînée (20, 30) et ledit arbre entraîné (25) sont logés dans un carter de boîte de vitesses (3), ledit carter de boîte de vitesses (3) s'étendant à partir d'un côté dans le sens de la largeur de la carrosserie du véhicule dudit moteur (1) vers un côté arrière de ladite carrosserie du véhicule.

9. Véhicule à moteur selon la revendication 7 ou 8, dans lequel ledit arbre entraîné (25) et l'arbre de sortie (27) sont disposés en parallèle l'un à l'autre avec une distance mutuelle dans la direction longitudinale de ladite carrosserie du véhicule.

10. Véhicule à moteur selon l'une quelconque des revendications 7 à 9, dans lequel une extrémité de l'arbre entraîné (25) s'étend à partir de l'un desdits paliers (29) dans une chambre à engrenage (S1) du carter de boîte de vitesses (3) vers la carrosserie du véhicule et ladite extrémité étendue de l'arbre entraîné (25) est pourvue d'un engrenage de réduction de vitesse (38) dudit dispositif de réduction de vitesse (38, 39, 40, 41, 26).

11. Véhicule à moteur selon l'une quelconque des revendications 7 à 9, dans lequel l'arbre entraîné (25), l'arbre de sortie (27), l'arbre intermédiaire (26) et le vilebrequin (7) d'un moteur (1) supportant ladite poulie d'entraînement (20) sont disposés en parallèle les uns aux autres dans le sens de la largeur de la carrosserie du véhicule.
